# EUROPÄISCHE PATENTSCHRIFT

(11) **EP 0 345 520 B1**
(45) Veröffentlichungstag und Bekanntmachung des Hinweises auf die Patenterteilung: **15.12.1993**
(21) Anmeldenummer: 89109176.1
(22) Anmeldetag: 22.05.1989
(51) Int. Cl.: B01D 53/34, B01D 53/08, B01D 45/08

(54) **Vorrichtung zum Reinigen von Abgasen, insbesondere Rauchgasen, mittels Schüttgut.**
Apparatus for cleaning gases, especially smoke, using a layer of bulk material.
Dispositif pour le purification de gaz, en particulier gaz de fumée, utilisant une couche de matière en vrac.

(30) Priorität: 25.05.1988 DE 3817686
(43) Veröffentlichungstag der Anmeldung: 13.12.1989
(73) Patentinhaber: Hugo Petersen Ges. für verfahrenstechn. Anlagenbau mbH & Co KG, 65036 Wiesbaden (DE)
(72) Erfinder: Thielen, Walter, Dr., D-5270 Gummersbach (DE); Hemschemeier, Hans, D-5270 Gummersbach (DE)
(74) Vertreter: Carstens, Wilhelm, Dipl.-Phys.

(56) Entgegenhaltungen:
- EP-A- 0 264 669
- DE-A- 2 741 031
- FR-A- 1 289 861
- PATENT ABSTRACTS OF JAPAN, Band 8, Nr. 77 (C-218)[1514], 10. April 1984;& JP-A-59 329 (BABCOCK HITACHI K.K.) 05-01-1984

## Beschreibung

Die Erfindung betrifft eine Vorrichtung zum Reinigen von Abgasen, insbesondere von Rauchgasen, mittels Schüttgut, das mittels Schwerkraft einen im wesentlichen vertikal angeordneten und auf gegenüberliegenden Seiten von gasdurchlässigen Wänden begrenzten Schacht durchwandert und im wesentlichen von einem horizontal ausgerichteten Abgasstrom durchkreuzt wird, mit einer Einrichtung zum fortlaufenden Abführen von durch die gasdurchlässige Wand auf der Abströmseite durchgetretenen Partikeln nach unten und einer auf der Abströmseite der Schüttgutschicht mit Abstand von der gasdurchlässigen Wand angeordneten und eine die Fläche der gasdurchlässigen Wand abdeckenden Prallabscheideranordnung bestehend aus einer Vielzahl von von außen nach innen geneigten, jalousieartig übereinander angeordneten und sich horizontal erstreckenden Prallplatten.

Eine solche Vorrichtung ist aus Patent Abstracts of Japan, Band 8, Nr. 77 (C-218)[1514], 10. April 1984; & JP-A-59 329 (Babcock Hitachi K.K) 05-01-1984 bekannt. Bei der dort gezeigten Vorrichtung ist die gasdurchlässige Wand auf der Abströmseite als Jalousie, Drahtnetz, Lochplatte oder poröse Platte ausgebildet. Bei derartig ausgebildeten durchlässigen Wänden besteht die Gefahr eines zu hohen Druckverlustes wie z. B. bei dem Einsatz einer Jalousie oder einer Verstopfung wie im Falle eines Lochbleches, wenn das Schüttgut selbst feinteilig ist oder beim Durchwandern der Schüttgutschicht Feinteile entstehen und wenn zugleich die Dicke des Lochbleches größer ist als der Querschnitt der Löcher. Der Lochdurchmesser im Lochblech wird dabei durch den kleinsten Durchmesser des zu haltenden Schüttguts bestimmt, während die Dicke des Lochbleches durch die statische Belastung durch die Schüttgutschicht bestimmt ist.

Der Wirkungsgrad der Prallabscheideranordnung bei der bekannten Vorrichtung ist nicht in allen Fällen ausreichend, da der Abprall der aus der gasdurchlässigen Wand auf der Abströmseite austretenden Teilchen an den Prallplatten der Prallabscheideranordnung nicht immer in Richtung nach unten auf den Abzugskanal zwischen abströmseitiger gasdurchlässiger Wand und Prallabscheideranordnung erfolgt. Wegen der Strömungsführung der aus der abströmseitigen Jalousie austretenden Gasteilströme in den Zwischenraum zwischen den Prallplatten wird ein wesentlicher Teil der Feststoffe, insbesondere alle Feinanteile, parallel zu den Prallplatten geführt werden und ein wesentlicher Teil über die Außenkante der Prallplatten in den Reingasstrom eintreten.

Es ist daher die Aufgabe der vorliegenden Erfindung, eine Vorrichtung der gattungsgemäßen Art anzugeben, bei der einerseits die Verstopfungsgefahr vermindert und andererseits die Abscheidewirkung der Prallabscheideranordnung verbessert wird.

Diese Aufgabe wird dadurch gelöst, daß die gasdurchlässige Wand auf der Abströmseite als ein mit in die Schüttgutschicht hinein- oder von der Schüttgutschicht fort ausgebogenen Kiemen versehenes Kiemenblech ausgebildet ist und an den in Strömungsrichtung des Gasstroms außen liegenden Kanten der Prallplatten Fangbleche vorgesehen sind.

Bei dem Kiemenblech können die Kiemen nach unten und in die Schüttgutschicht hinein und nach oben und von der Schüttgutschicht fort ausgebogen sein. Bei den Kiemenblechen bestimmt der Abstand der freien Kante der ausgebogenen Kieme von der Ebene des Bleches den effektiven Lochquerschnitt. Bei Kiemenblechen kommt es zwischen dem an die Öffnung herangeführten Teilchen und dem Blech im wesentlichen nur zu einem Linieneingriff, während bei den normalen als Flachblech ausgebildeten Lochblechen das einzelne Partikel über die gesamte Dicke des Bleches im Eingriff mit dem Blech steht, so daß dort die Verstopfungsgefahr deutlich erhöht wird.

Die vom Fangblech eingefangenen Partikeln werden auf die Prallplatten der Prallabscheideranordnung geleitet und von diesen nach unten abgeführt, so daß sie vorzugsweise agglomeriert über die untere Kante der Prallplatten nach unten abrutschen können.

Durch das Kiemenblech werden bewußt Partikel durchgelassen, um ein Verstopfen der Öffnungen zu verhindern. Durch die Zuordnung von Fangblechen zu den einzelnen Prallplatten der Prallabscheideranordnung werden auch bewußt durchgelassene kleinere Partikel im wesentlichen sicher abgeschieden.

Der Anstellwinkel der Prallplatten gegenüber der Horizontalen liegt vorzugsweise im Bereich von 30 bis unter 90°.

Die Erfindung soll nun anhand der beigefügten Figuren näher erläutert werden. Es zeigen:
- FIG. 1: eine Aufsicht auf und einen Schnitt durch ein bekanntes Lochblech mit kreisrunden Löchern,
- FIG. 2: eine Darstellung vergleichbar FIG. 1 für ein bekanntes Schlitzblech,
- FIG. 3: eine Darstellung vergleichbar FIG. 1 für ein erfindungsgemäßes Kiemenblech mit nach unten ausgebogenen Kiemen,
- FIG. 4: eine Darstellung vergleichbar FIG. 3 mit nach oben und außen ausgebogenen Kiemen und
- FIG. 5: einen Teilschnitt durch ein Kiemenblech auf der Abströmseite der Schüttgutschicht und einen nachgeschalteten Prallabscheider mit übereinander angeordneten Prallplatten.

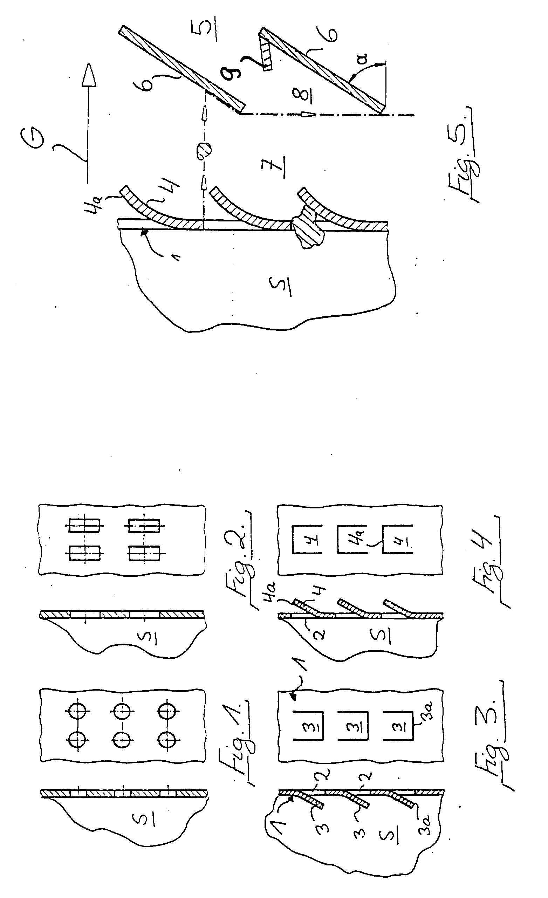

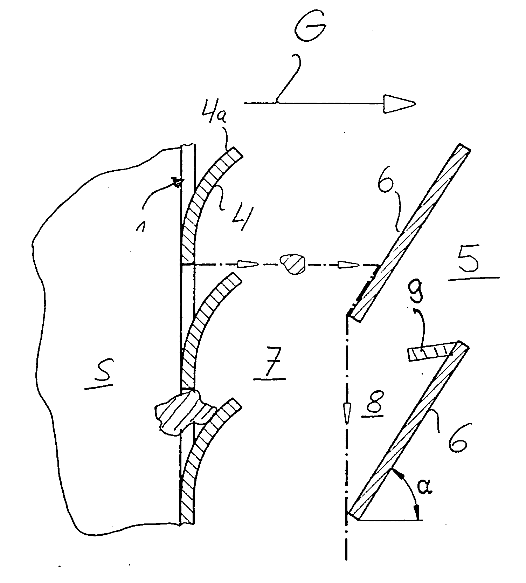

Die FIG. 1 und 2 bedürfen keiner näheren Erläuterung.

Das Kiemenblech 1 gemäß FIG. 3 weist eine Vielzahl von Löchern 2 auf, denen jeweils eine nach unten und in die Schüttgutschicht S hinein ausgebogene Kieme 3 zugeordnet ist. Der effektive Querschnitt des Loches 2 ist durch den Abstand der freien Kante 3a der Kieme von der Ebene des Kiemenbleches 1 bestimmt.

Bei der FIG. 4 ist jedem Loch 2 eine nach oben und von der Schüttgutschicht fort gebogene Kieme 4 zugeordnet.

Bei der in der FIG. 5 als Teilquerschnitt dargestellten Vorrichtung wird die Schüttgutschicht S von einem Kiemenblech 1 mit nach oben ausgebogenen Kiemen 4 begrenzt. Wie in der FIG. 5 schematisch dargestellt ist, werden größere Teilchen als der effektive Querschnitt an der freien Kante 4a der Kieme 4 zurückgehalten, während kleinere Teilchen mit dem durch das Kiemenblech tretenden Gasstrom G ausgetragen werden. Diese Partikeln werden an dem mit Abstand von dem Kiemenblech 1 angeordneten Prallabscheider 5 abgeschieden und durch die auf sie wirkende Schwerkraft entsprechend der strichpunktierten Linie nach unten abgezogen. Der Prallabscheider 5 besteht aus einer Vielzahl von übereinander angeordneten und von außen nach innen geneigten Prallplatten 6, deren Anstellwinkel α gegen die Horizontale im Bereich von 30° bis 90° liegt. Um einen Aufbau einer Schüttgutschicht in dem zwischen dem Kiemenblech 1 und dem Prallabscheider 5 vorhandenen Ableitraum 7 zu vermeiden, werden die Partikeln, die von dem Prallabscheider 5 abgeschieden und dem Ableitraum 7 zugeführt werden, am unteren Ende des Ableitraumes 7 durch nicht gezeigte Einrichtungen, wie z.B. Austragsschnecken oder dergleichen, abgeführt oder in einem unterhalb des Ableitraumes 7 vorgesehenen Sammelvolumen gesammelt. Es kommt bei Betrieb der erfindungsgemäßen Vorrichtung jedenfalls nicht zu einem Ansammeln von aus der Schicht S mitgerissenen Teilchen in den Taschen 8 zwischen den Prallabscheiderplatten 6.

Die Prallabscheiderplatten 6 sind an ihren oberen außen liegenden Kanten in der aus der FIG. 2 ersichtlichen Weise mit Fangblechen 9 versehen sein, die selbstverständlich auch einstückig mit den Prallplatten ausgebildet ausgebildet sein können.

## Patentansprüche

1. Vorrichtung zum Reinigen von Abgasen (G), insbesondere von Rauchgasen, mittels Schüttgut (S), das mittels Schwerkraft einen im wesentlichen vertikal angeordneten und auf gegenüberliegenden Seiten von gasdurchlässigen Wänden begrenzten Schacht durchwandert und im wesentlichen von einem horizontal ausgerichteten Abgasstrom (G) durchkreuzt wird, mit einer Einrichtung (7) zum fortlaufenden Abführen von durch die gasdurchlässige Wand (1) auf der Abströmseite durchgetretenen Partikeln nach unten und einer auf der Abströmseite der Schüttgutschicht mit Abstand von der gasdurchlässigen Wand angeordneten und eine die Fläche der gasdurchlässigen Wand (1) abdeckenden Prallabscheideranordnung (5) bestehend aus einer Vielzahl von von außen nach innen geneigten, jalousieartig übereinander angeordneten und sich horizontal erstreckenden Prallplatten (6),
**dadurch gekennzeichnet,**
daß die gasdurchlässige Wand auf der Abströmseite als ein mit in die Schüttgutschicht hinein- oder von der Schüttgutschicht fort ausgebogenen Kiemen versehenes Kiemenblech (1; 2, 3; 2, 4) ausgebildet ist und an den in Strömungsrichtung des Gasstromes (G) außen liegenden Kanten der Prallplatten (6) Fangbleche (9) vorgesehen sind.

2. Vorrichtung nach Anspruch 1,
**dadurch gekennzeichnet,**
daß der Anstellwinkel ( ) der Prallplatten (6) gegenüber der Horizontalen im Bereich von 30° bis unter 90° liegt.

## Claims

1. Device for purification of waste gases (G), especially flue gases, by means of loose material, which under the influence of gravity moves through a substantially vertically arranged cavity delimited on opposite sides thereof by walls permeable to gas and is crossed by a horizontally directed waste gas stream (G), including a device (7) for continuously withdrawing particles, which have passed the wall (1) permeable to gas on the flow-off side and a repell seperator (5) arranged on the flow-off side of the loose material layer and spaced from the wall permeable to gas and covering the surface of the wall (1) permeable to gas, said seperator comprising a purality of repell plates (6) being inclined from the exterior to the interior, arranged one above the other in a louver-like manner and extending horizontally,
**characterized**
in that the wall permeable to gas on the flow-off side is formed as a gill plate (1; 2, 3; 2, 4) provided with gills being bent into the loose material layer or being bent away from the loose material layer and in that at those edges of the repell plates (6) lying outwardly with respect to the flow direction of the gas stream (G) catching plates (9) are provided.

2. The claim according to claim 1,
**characterized**
in that the angle of the repell plates (6) with respect to the horizontal is in the range from 30° to 90°.

## Revendications

1. Appareil d'épuration de gaz rejetés (G), notamment de fumées, au moyen d'une matière en vrac (S) qui se déplace sous l'effet de la pesanteur dans une cheminée disposée d'une manière pratiquement verticale et délimitée sur des côtés opposés par des parois perméables aux gaz et qui est pratiquement croisée par un courant de gaz dégagés (G) dirigé horizontalement, comportant un dispositif (7), permettant d'évacuer d'une manière continue vers le bas des particules séparées du côté aval par la paroi (1) perméable aux gaz, et un dispositif séparateur par collision (5) qui est disposé, du côté aval de la couche de matière en vrac, à distance de la paroi perméable aux gaz, qui recouvre l'une des surfaces de la paroi (1) perméable aux gaz et qui est constitué de multiples plaques de collision (6) inclinées de l'extérieur vers l'intérieur, disposées les unes au-dessus des autres à la façon de persiennes et orientées horizontalement, caractérisé en ce que la paroi perméable aux gaz est réalisée, du côté aval, sous la forme d'une tôle à ouïes (1 ; 2, 3 ; 2, 4) comportant des ouïes pliées de manière à pénétrer dans la couche de matière en vrac ou a s'en éloigner et en ce que des tôles d'arrêt (9) sont prévues sur les bords des plaques de collision( 6) qui sont situés vers l'extérieur dans le sens d'écoulement du courant de gaz (G).

2. Appareil suivant la revendication 1, caractérisé en ce que l'angle de pente (α) des plaques de collision (6) est compris entre 30° et une valeur inférieure à 90° vis-à-vis de l'horizontale.
